# EUROPÄISCHE PATENTSCHRIFT

(11) **EP 1 727 449 B1**
(45) Veröffentlichungstag und Bekanntmachung des Hinweises auf die Patenterteilung: **26.09.2007**
(21) Anmeldenummer: 05715823.0
(22) Anmeldetag: 08.03.2005
(51) Int. Cl.: A47G 19/12

(54) **BEHÄLTERDECKEL**
CONTAINER LID
COUVERCLE DE CONTENANT

(30) Priorität: 25.03.2004 DE 102004014646
(43) Veröffentlichungstag der Anmeldung: 06.12.2006
(73) Patentinhaber: Brita GmbH, 65232 Taunusstein (DE)
(72) Erfinder: WITTE, Kay-Uwe, 60594 Frankfurt/Main (DE); HOFMANN, Uwe, 65321 Heidenrod (DE)
(74) Vertreter: Fuchs
(86) Internationale Anmeldenummer: PCT/EP2005/002423
(87) Internationale Veröffentlichungsnummer: WO 2005/092155

(56) Entgegenhaltungen:
- EP-A- 1 169 954
- WO-A-00/55099
- DE-C- 214 596
- US-A- 2 176 395
- US-B1- 6 302 307

## Beschreibung

Die Erfindung betrifft einen Behälterdeckel mit einer Einfüllöffnung, die ein bewegbares Verschlusselement aufweist.

Derartige Behälterdeckel finden sich auf allen Arten von Behältern für Flüssigkeiten, insbesondere für Getränke, um den Behälterinhalt zu schützen.

Ein geschlossener Behälterdeckel, d. h. ein Behälterdeckel ohne eigene Einfüllöffnung, schützt den Behälterinhalt vor Verunreinigungen und besitzt in der Regel lediglich eine Aussparung im Bereich des Ausgusses des Behälters, die gegebenenfalls durch eine Klappe oder dergleichen verschließbar ausgebildet sein kann. Der Behälterdeckel kann auf Wasserkochem, Wasserfiltem oder auf üblichen Flüssigkeitsbehältern, wie Kannen, angeordnet sein, wobei der Deckel in der Regel lösbar auf dem Behälter befestigt ist, damit er zum Befüllen und/oder Reinigen des Behälters bzw. des Deckels abgenommen werden kann. Das Auf- und Absetzen des Behälterdeckels ist nachteilig, weil dies einerseits Zeit beansprucht und andererseits die Befestigungsmittel einem unnötigen Verschleiß unterliegen. Bei unachtsamer Handhabung können die Befestigungsmittel abbrechen und der Deckel beschädigt werden.

Aus der DE 39 37 581 A1 ist eine Kanne mit einer Ausgusstülle bekannt, in der eine Klappe schwenkbar gelagert ist, die in Ruhestellung die Ausgusstülle abdeckt. Die Klappe ragt mit einem kurzen Hebelarm in einen Führungskanal des Deckels, in welchem ein als Ring ausgebildetes Gewicht angeordnet ist. Kippt man die Kanne, dann gelangt das Gewicht gegen diesen Hebelarm und öffnet die Klappe selbsttätig.

Es sind auch Behälterdeckel bekannt, die eine Einfüllöffnung aufweisen. Diese Einfüllöffnung kann durch einen im Deckel angeordneten, manuell bewegbaren Schieber verschlossen und geöffnet werden, wie dies beispielsweise in der DE 695 22 833 T2 beschrieben wird. Der Nachteil einer Schieberanordnung besteht darin, dass häufig vergessen wird, den Schieber in Schließstellung zu bringen, so dass der Behälterinhalt von außen zugänglich ist und verunreinigen kann.

Teilweise ist die Handhabung eines solchen Schiebers umständlich und im Laufe der Zeit wird die Leichtgängigkeit des Schiebers beeinträchtigt.

Aus DE 214 596 C ist eine Kanne gemäss dem Oberbegriff des Anspruchs 1 bekannt. Diese Kanne hat durch die plane oder konkave Formgebung der Verschlussplatte der Einfüllöffnung den Nachteil, daß zu Beginn des Eingiessvorgangs die Flüssigkeit beim Auftretten auf die Verschlussplatte so abgelenkt wird, daß die Flüssigkeit herausspritzt bis die Verschlussplatte sich in ihre Öffnungsstellung bewegt hat.

Es ist daher Aufgabe der Erfindung, einen Behälterdeckel mit einem Verschlusselement bereitzustellen, der diese Nachteile vermeidet.

Diese Aufgabe wird mit einem Behälterdeckel mit den kennzeichnenden Merkmalen des Anspruchs 1 gelöst.

Die beiden Arme bilden Hebelarme, die sich von der Schwenkachse in entgegengesetzte Richtungen erstrecken.

Aufgrund des größeren Drehmoments des zweiten Arms wird die Wippe und damit die Verschlussplatte in Schließstellung gehalten. Aus dieser Ruhestellung heraus bewegt sich die Wippe in Öffnungsstellung erst dann, wenn eine Flüssigkeit auf die Verschlussplatte gegossen wird. Durch den Flüssigkeitsimpuls klappt die Wippe in Öffnungsstellung und bei Beendigung des Einfüllvorgangs schwenkt die Wippe in ihre Ausgangsstellung, d. h. in die Schließstellung selbsttätig zurück. Es wird dadurch immer ein Verschluss der Einfüllöffnung gewährleistet, ohne dass der Benutzer manuell eingreifen muss.
Die Wippe kann lösbar am Deckel befestigt sein und z. B. in entsprechende Aufnahmeelemente eingeclipst werden. Eine andere Ausführungsform sieht vor, dass die Wippe nicht abnehmbar und somit unverlierbar angeordnet ist.

Vorzugsweise weist der erste Arm unter der Verschlussplatte einen Schwimmer auf. Diese Ausgestaltung hat den Vorteil, dass bei ansteigendem Flüssigkeitsspiegel im Behälter der Rückschwenkvorgang der Wippe unterstützt und die Einfüllöffnung durch das Aufschwimmen des Schwimmers automatisch verschlossen wird. Dieses Aufschwimmen signalisiert dem Benutzer auch, dass er den Einfüllvorgang beenden muss.

Die Größe des Schwimmers, der Abstand des Schwimmers zur Schwenkachse der Wippe und das Gegengewicht sind hierbei so auszulegen, dass die einströmende Flüssigkeit bei normalem Betrieb den ersten Arm möglichst nicht unter den ansteigenden Flüssigkeitsspiegel drücken kann. Unter normalem Betrieb wird der Zulauf aus einem anderen Gefäß oder aus einem üblicherweise im Haushalt vorhandenen Wasserhahn verstanden.

Damit sich die Wippe beim Öffnungsvorgang nicht in den Totpunkt bewegt, wobei die Wippe eine vertikale Stellung annehmen würde, ist vorzugsweise ein Anschlag vorgesehen, der die Schwenkbewegung der Wippe begrenzt. In Öffnungsstellung nimmt die Wippe dadurch eine Schrägstellung ein, aus der sie in ihre Ruhestellung, d. h. in die Schließstellung, zurückschwenken kann.

Um ein möglichst großes Drehmoment durch die Auftriebskräfte zu erzeugen, ist der Schwimmer vorzugsweise am freien Ende des ersten Arms angeordnet. Der Schwimmer kann sich auch über den Rand der Verschlussplatte hinaus erstrecken, wenn dies für die Einstellung der Auftriebskraft zweckmäßig sein sollte.

Der Schwimmer kann auch beabstandet zur Verschlussplatte angeordnet sein. Es bietet sich jedoch an, den Schwimmer unmittelbar unter der Verschlussplatte anzubringen.

In einer einfachen Ausführungsform weist der erste Arm eine Luftkammer auf. Die Form der Luftkammer und die Wand der Luftkammer können beliebig ausgestaltet sein. Es ist jedoch von Vorteil, wenn die Wand der Luftkammer nach unten gewölbt ausgeführt ist. Um durch die Auftriebskräfte ein möglichst großes Drehmoment einstellen zu können, besitzt die Wand der Luftkammer ihren maximalen Abstand von der Verschlussplatte vorzugsweise im Bereich des freien Endes des ersten Arms. Diese Ausgestaltung hat auch den Vorteil, dass in Öffnungsstellung bei ansteigendem Flüssigkeitsspiegel bereits ein frühzeitiger Kontakt zur Flüssigkeitsoberfläche hergestellt wird. Eine bevorzugte Ausführungsform sieht vor, dass der erste Arm unter der Verschlussplatte eine löffelartige Form aufweist.

Die löffelartige Wölbung hat den weiteren Vorteil, dass die Kontaktfläche mit der im Behälter ansteigenden Flüssigkeit gering ist. Aufgrund der Oberflächenspannung der betreffenden Flüssigkeit könnte die Wippe am Schließvorgang gehindert werden, wenn das Drehmoment des zweiten Arms zu gering ist. Durch eine Verringerung der Kontaktfläche kann auch das Gegengewicht entsprechend kleiner dimensioniert werden.

Die Verschlussplatte ist nach oben gewölbt. Dies hat den Vorteil, dass beim Eingießen von Flüssigkeit der Spritzeffekt minimiert wird. Der Flüssigkeitsstrahl wird beim Auftreffen auf die gewölbte Oberfläche gebrochen und gleichmäßig verteilt, so dass ein Herausspritzen der Flüssigkeit aus der Einfüllöffnung minimiert wird.
Die Verschlussplatte weist vorzugsweise eine Dichtfläche auf, die in Schließstellung mit einer entsprechend ausgebildeten Fläche am Rand der Einfüllöffnung zusammenwirkt. Auch kann die Verschlussplatte mindestens ein Dichtelement aufweisen, so dass in der Schließstellung ein möglichst flüssigkeitsdichter Abschluss gewährleistet wird.

Vorzugsweise ist die Wippe aus Kunststoff gefertigt. Kunststoff hat den Vorteil, dass er leicht ist, so dass für den Schwimmer nur ein relativ kleines Volumen für die erforderlichen Auftriebskräfte benötigt wird. Andererseits kann auch das Gegengewicht entsprechend klein gehalten werden.

Als Gegengewicht kann die Wippe eine Metalleinlage, insbesondere einen Metallstift, z. B. einen Edelstahlstift, aufweisen. Dieser Metallstift kann innerhalb des zweiten Arms angeordnet sein.

Gemäß einer bevorzugten Ausführungsform ist die Wippe an der Unterseite des Behälterdeckels schwenkbar gelagert.

Die Einfüllöffnung kann eine trichterförmige Ausgestaltung aufweisen, was den Einfüllvorgang erleichtert. Die Wippe ist bei dieser Ausführungsform vorzugsweise am Öffnungsrand gelagert. Es wird dadurch eine platzsparende Anordnung mit kurzen Wipparmen geschaffen.

Durch die trichterförmige Ausgestaltung steht neben der Einfüllöffnung ein sich nach oben erstreckender Freiraum zur Verfügung, in den der zweite Arm in Öffnungsstellung unterhalb des Behälterdeckels einschwenken kann. Der zweite Arm ist von außen für den Betrachter nicht sichtbar.

Es kann jedoch von Vorteil sein, die Bewegung des zweiten Arms zu beobachten, beispielsweise um frühzeitig zu erkennen, wann der Einfüllvorgang abgebrochen werden muss, um ein Überlaufen des Behälters zu verhindern. Um dies zu erreichen, ist gemäß dieser weiteren Ausführungsform vorgesehen, dass die Wippe sich durch den Behälterdeckel nach außen erstreckt, wobei der zweite Arm mindestens teilweise außerhalb des Behälterdeckels angeordnet ist. Um eine platzsparende Anordnung zu schaffen, ist vorgesehen, dass der zweite Arm in Schließstellung vorzugsweise in eine Deckelmulde eingreift. Ein weiterer Vorteil dieser Ausführungsform besteht darin, dass das vom Deckel umschlossene Innenvolumen gegenüber dem der zuvor beschriebenen Ausführungsform reduziert werden kann.

Vorzugsweise weist der Rand der Einfüllöffnung eine Dichtfläche auf, an der die Verschlussplatte anliegt. Auch kann der Rand der Einfüllöffnung mindestens ein Dichtelement aufweisen, um in Schließstellung einen möglichst flüssigkeitsdichten Abschluss zu schaffen.

Vorzugsweise besitzt der Behälterdeckel eine Entlüftungsöffnung. Wenn die Wippe die Einfüllöffnung verschließt, kann dies in Abhängigkeit der Fertigungstoleranzen zu einem luftdichten Abschluss führen. Um den Öffnungsvorgang der Wippe zu erleichtern, ist es von Vorteil, wenn die innerhalb des Behälters zu Beginn des Öffnungsvorgangs zu verdrängende Luft entweichen kann.

Die Entlüftungsöffnung ist vorzugsweise an der der Ausgießöffnung abgewandten Seite des Behälterdeckels, vorzugsweise verdeckt angeordnet. Die Entlüftungsöffnung ist hierbei vorzugsweise oberhalb des Öffnungsrandes vorzusehen.

Beispielhafte Ausführungsformen der Erfindung werden nachfolgend anhand der Zeichnungen näher erläutert.

Es zeigen:
- Figur 1: einen Vertikalschnitt durch eine Kanne mit eingesetztem Trichter und aufgesetztem Deckel,
- Figur 2a: einen Vertikalschnitt durch einen Behälterdeckel mit Wippe in Schließstellung,
- Figur 2b: den in Figur 2a gezeigten Deckel mit Wippe in teilweise geöffneter Stellung,
- Figur 2c: den in Figur 2a gezeigten Deckel mit Wippe in Öffnungsstellung,
- Figur 3a: eine perspektivische Darstellung einer Wippe,
- Figur 3b: die Seitenansicht der in Figur 3a gezeigten Wippe,
- Figur 4a: das Unterteil der Wippe mit Gegengewicht,
- Figur 4b: das Oberteil der Wippe und
- Figuren 5a, 5b: Vertikalschnitte durch einen Deckel mit Wippe gemäß einer weiteren Ausführungsform.

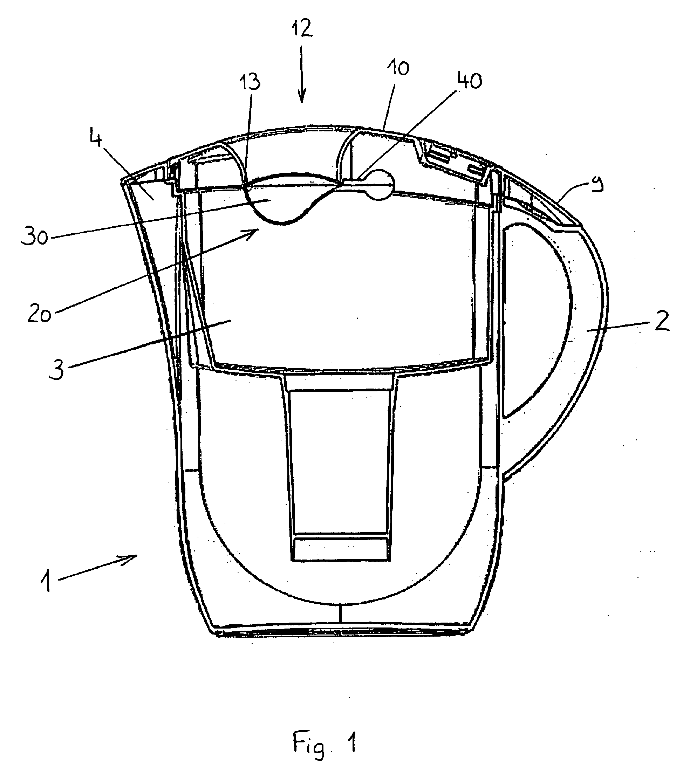

In der Figur 1 ist ein Vertikalschnitt durch eine Kanne 1 dargestellt, die einen Griff 2 und einen Ausguss 4 aufweist. Innerhalb der Kanne 1 ist ein Trichter 3 eingesetzt, in den wiederum eine Filterkartusche (nicht dargestellt) eingesetzt werden kann. Die Kanne 1 ist somit als Wasserfilter verwendbar. Die Kanne 1 wird durch einen Deckel 10 verschlossen, der eine Einfüllöffnung 12 sowie ein Griffteil 9 aufweist, dessen Kontur an den Griff 2 der Kanne 1 angepasst ist. Zum Verschließen der Einfüllöffnung 12 ist eine Wippe 20 unterhalb des Deckels 10 um die Schwenkachse 21 schwenkbar gelagert angeordnet, wobei die Wippe 20 einen ersten Arm 30 und einen zweiten Arm 40 aufweist. In der Figur 1 ist die Wippe 20 in Schließstellung dargestellt.

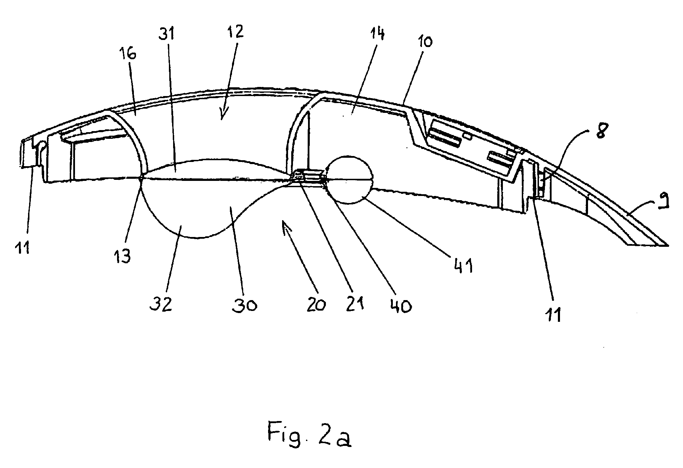

In der Figur 2a ist ein Schnitt durch den in Figur 1 dargestellten Deckel 10 vergrößert dargestellt. Der Deckel 10 weist eine gewölbte Oberfläche auf, in der sich die Einfüllöffnung 12 befindet, deren Wand 16 sich trichterförmig nach unten erstreckt. Die Anordnung der Wippe 20 und des Randes 13 sind bezüglich des Auflagerandes 11 so gewählt, dass beim Aufschwimmen des Schwimmers die Einfüllöffnung verschlossen wird, bevor die im Behälter ansteigende Flüssigkeit die tiefste Stelle des Auflagerands 11 erreicht und aus dem Behälter auslaufen kann. Dies setzt voraus, dass der Druck des Wasserstrahls geringer ist als der Auftrieb des Schwimmers. Ferner ist an der dem Ausguss 4 abgewandten Seite eine Entlüftungsöffnung 8 vorgesehen, die in einem Steg im Ansatzbereich des Griffteils 9 angeordnet ist. Die Entlüftungsöffnung ist durch die verdeckte Anordnung von oben nicht sichtbar.

Die Einfüllöffnung 12 wird von der Wippe 20 verschlossen, die sich in der Figur 2a in Schließstellung, d. h. in Ruhestellung, befindet.
Der erste Arm 30 weist eine Verschlussplatte 31 auf, wobei unterhalb der Verschlussplatte 31 ein Schwimmer 32 angeordnet ist. Der Schwimmer 32 wird durch eine Luftkammer 33 gebildet, deren Wand 34 nach unten gewölbt ist. Die Wölbung ist im Bereich des freien Endes des ersten Arms 30 am stärksten ausgebildet und läuft in Richtung Schwenkachse 21 aus, wodurch dem ersten Arm 30 eine löffelartige Form verliehen wird. Der zweite Arm 40 trägt am freien Ende ein in Seitenansicht kreisförmiges Gewichtsgehäuse 41, in dem das Gegengewicht 42 angeordnet ist.

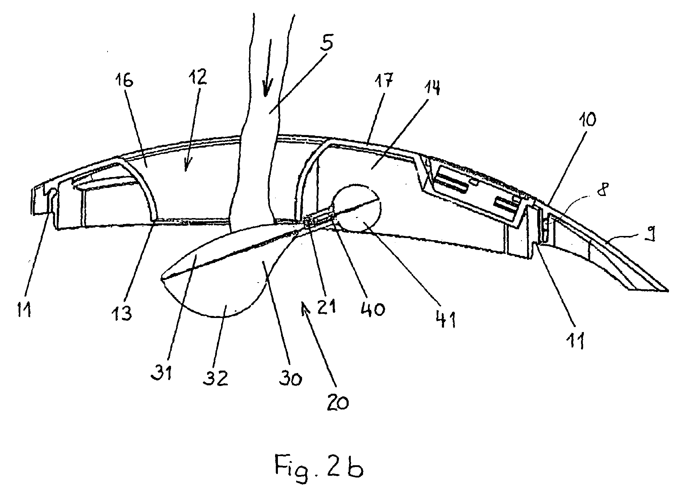

In der Figur 2b ist die Wippe 20 in teilgeöffneter Stellung dargestellt. Um den Einfüllvorgang zu erläutern, ist schematisch ein Wasserstrahl 5 eingezeichnet, der auf die Oberfläche der Verschlussplatte 31 auftrifft und dadurch den ersten Arm 30 nach unten, d. h. in das Behälterinnere drückt. Das durch den Flüssigkeitsimpuls erzeugte Drehmoment ist hierbei größer als das durch das Gegengewicht 42 im Gewichtsgehäuse 41 bewirkte Drehmoment.

Aufgrund der gewölbten Oberfläche der Verschlussplatte 31 werden Spritzeffekte deutlich reduziert, weil der Wasserstrahl 5 beim Auftreffen auf die Verschlussplatte 31 nach allen Seiten gleichmäßig ablaufen kann.

In der Figur 2b ist zu sehen, dass sich der zweite Arm 40 mit dem Gewichtsgehäuse 41 nach oben bewegt. Neben der Einfüllöffnung 12 befindet sich ein durch die Trichterwand 16 und die Deckelwand 17 begrenzter Freiraum 14, in den der zweite Arm 40 einschwenken kann.

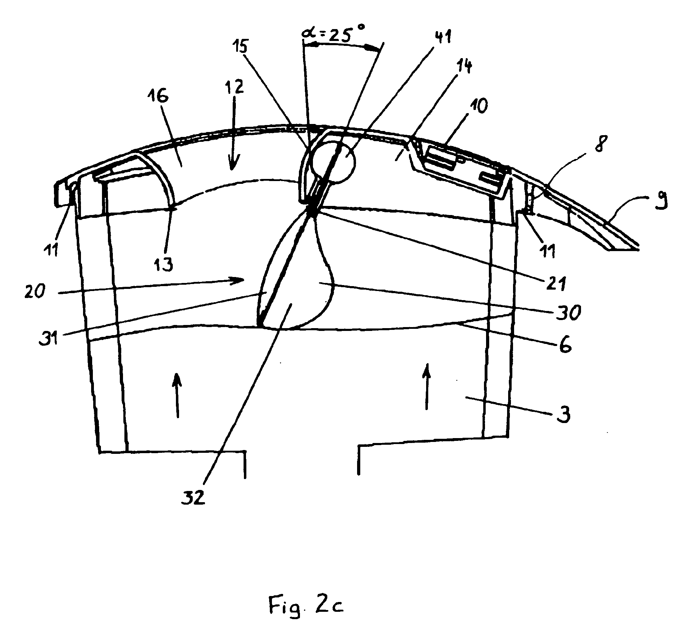

In der Figur 2c ist die Endstellung der Wippe 20 erreicht. Das Gewichtsgehäuse 41 liegt an der Außenfläche der trichterförmigen Wand 16 der Einfüllöffnung 12 an. Die Schwenkachse 21 ist derart angeordnet, dass im Zusammenwirken mit dieser als Anschlag 15 dienenden Wand 16 die Wippe 20 eine Schrägstellung einnimmt, die durch den Winkel α gekennzeichnet ist, der im gezeigten Beispiel ca. 25° beträgt. Der Winkel α kann auch größere Werte, z. B. 35° - 40° annehmen. Es wird dadurch vermieden, dass die Wippe den Totpunkt einnehmen kann (dies entspräche dem Winkel α gleich Null).

In der Figur 2c ist auch gleichzeitig der ansteigende Flüssigkeitsspiegel 6 dargestellt. Aufgrund der gewölbten Form des Schwimmers 32 wird bereits ein frühzeitiger Kontakt zum Flüssigkeitsspiegel 6 hergestellt, so dass das Aufschwimmen der Wippe 20 bereits zu einem frühen Zeitpunkt eintritt.

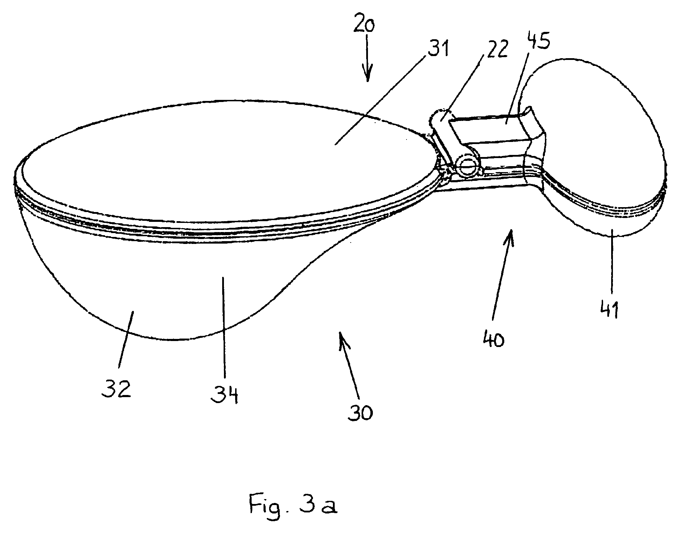

In der Figur 3a ist die Wippe 20 perspektivisch und vergrößert dargestellt. Die löffelförmige Ausgestaltung des ersten Arms 30 ist deutlich zu sehen. Durch die Verschlussplatte 31 wird der Innenraum des löffelförmigen ersten Arms 30 verschlossen, der die Luftkammer 33 und somit den Schwimmer 32 bildet. Die Wippe 20 weist ferner ein Schwenklager 22 auf, an das sich der zweite Arm 40 anschließt. An einem Steg 45 ist das Gewichtsgehäuse 41 angeformt, in dem das Gegengewicht 42 untergebracht ist.

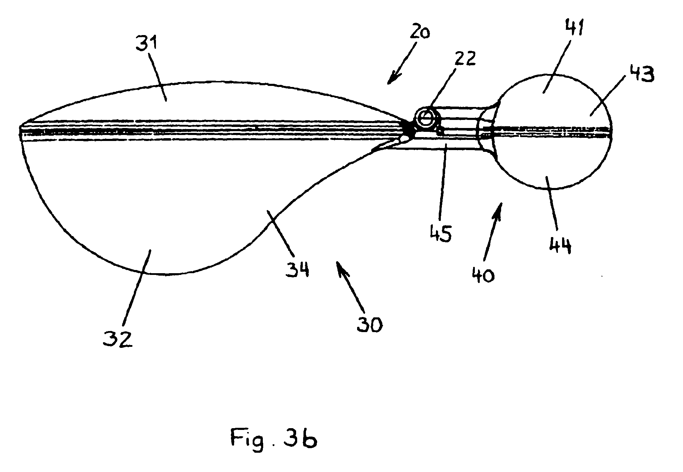

In der Figur 3b ist die Seitenansicht der Wippe 20 dargestellt.

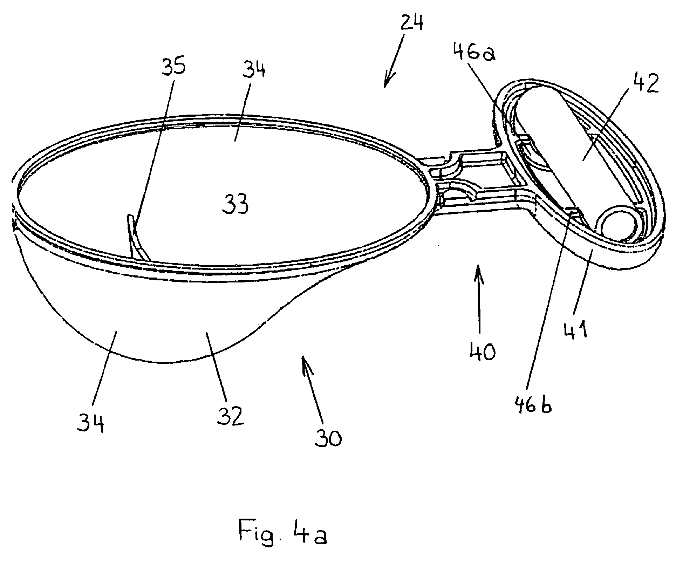

In der Figur 4a ist das Unterteil 24 der Wippe 20 dargestellt, so dass der Innenraum der Wippe 20 eingesehen werden kann. Die Luftkammer 33 besitzt im Inneren noch eine Verstärkungsrippe 35. Im Innern des Unterteils 44 des Gewichtsgehäuses 41 befindet sich das Gegengewicht 42 in Form eines Metallstiftes, der in zwei Fixierstege 46a, b eingesetzt ist.

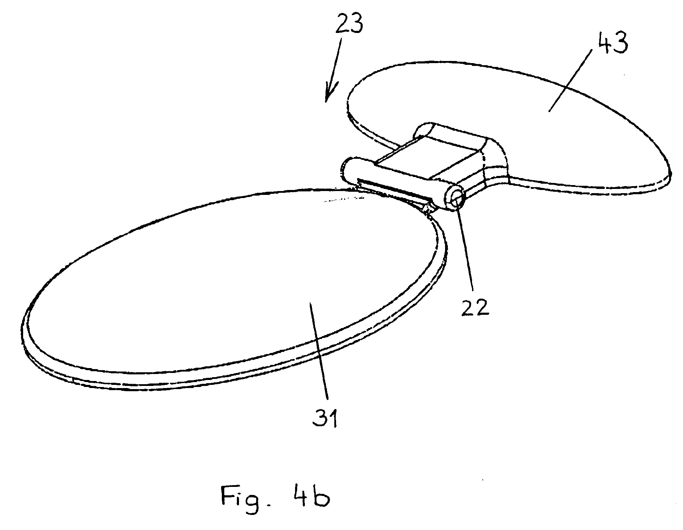

Das in Figur 4b gezeigte Oberteil 23 besteht aus der gewölbten Verschlussplatte 31, dem Schwenklager 22 und dem Oberteil 43 des Gewichtsgehäuses 41. Oberteil 23 und Unterteil 24 sind flüssigkeitsdicht miteinander verbunden, damit keine Flüssigkeit in den Schwimmer 32 und/oder in das Gewichtsgehäuse 41 eindringen kann, was die Funktion der Wippe 20 beeinträchtigen würde. Oberteil 23 und Unterteil 24 können miteinander verschweißt sein.

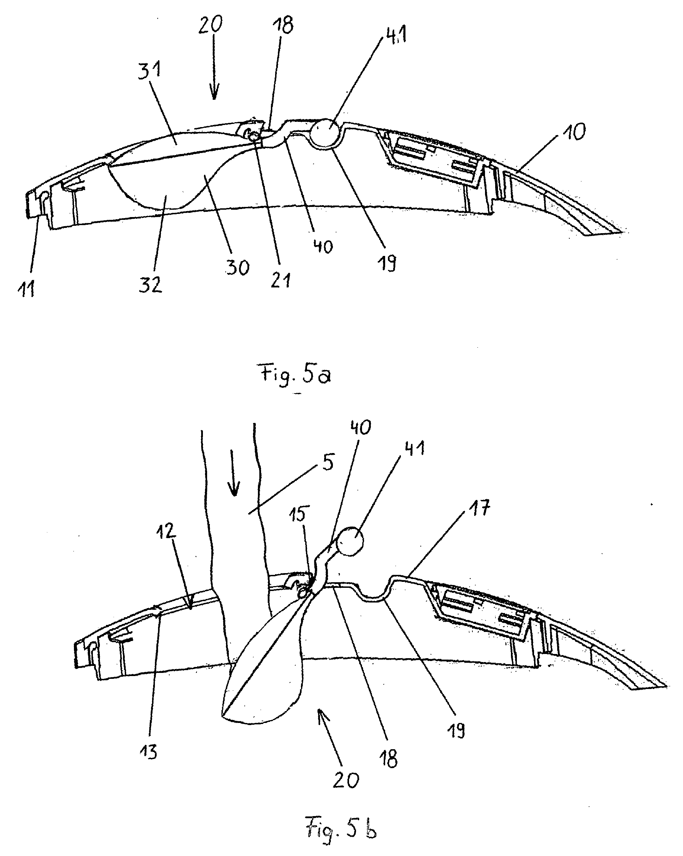

In der Figur 5a ist ein Vertikalschnitt durch einen Deckel 10 mit Wippe 20 gemäß einer weiteren Ausführungsform dargestellt. Die Wippe 20 unterscheidet sich von der in den vorangehenden Figuren gezeigten Wippe dadurch, dass der zweite Arm 40 sich durch eine Öffnung 18 im Deckel 10 nach oben erstreckt. Die Wippe 20 ist mit ihrer Schwenkachse 21 an der Unterseite des Deckels 10 angeordnet. Damit sich der zweite Arm 40 durch die Öffnung 18 erstrecken kann, weist der zweite Arm 40 in der hier gezeigten Ausführungsform einen gekrümmten Abschnitt auf, an den sich ein der Deckelöffnung angepasster Abschnitt anschließt, an dem das Gewichtsgehäuse 41 angeordnet ist. Der zweite Schwenkarm 40 ist somit für den Benutzer von außen sichtbar und auch zugänglich.

In der Figur 5a ist die Schließstellung der Wippe 20 dargestellt. Die Einfüllöffnung 12 wird durch den ersten Arm 30 verschlossen. Das Gegengewichtsgehäuse 41 am zweiten Arm 40 greift in eine Deckelmulde 19 ein, die in der Oberfläche des Deckels 10 eingeformt ist. Der zweite Arm 40 und die Deckelmulde 19 sind derart aufeinander abgestimmt, dass das Gegengewichtsgehäuse 41 in der Mulde 19 verschwindet und der zweite Arm 40 bündig mit der Außenoberfläche des Deckels 10 abschließt.

In der Figur 5b ist die Öffnungsstellung der Wippe 20 dargestellt. Auf den ersten Arm 30 trifft ein Wasserstrahl 5 auf, der den ersten Arm 30 nach unten drückt. Gleichzeitig wird dadurch der zweite Arm 40 nach oben bewegt und die Deckelmulde 19 freigegeben. Die Wippe 20 schwenkt soweit, bis der Arm 40 am Rand der Öffnung 18 anliegt, der als Anschlag 15 dient. Da der zweite Arm 40 für den Benutzer zugänglich ist, kann er gegebenenfalls den Schließvorgang manuell unterstützen.

### Bezugszeichenliste

- 1: Kanne
- 2: Griff
- 3: Trichter
- 4: Ausguss
- 5: Flüssigkeitsstrahl
- 6: Flüssigkeitsspiegel
- 8: Entlüftungsöffnung
- 9: Griffteil

- 10: Deckel
- 11: Auflagerand
- 12: Einfüllöffnung
- 13: Rand der Einfüllöffnung
- 14: Freiraum
- 15: Anschlag
- 16: Wand der Einfüllöffnung
- 17: Deckelwand
- 18: Öffnung
- 19: Deckelmulde

- 20: Wippe
- 21: Schwenkachse
- 22: Schwenklager
- 23: Oberteil
- 24: Unterteil

- 30: erster Arm
- 31: Verschlussplatte
- 32: Schwimmer
- 33: Luftkammer
- 34: Wand der Luftkammer
- 35: Versteifungsrippe
- 40: zweiter Arm
- 41: Gewichtsgehäuse
- 42: Gegengewicht
- 43: Oberteil
- 44: Unterteil
- 45: Steg
- 46a, b: Fixiersteg

## Patentansprüche

1. Behälterdeckel mit einer Einfüllöffnung (12), die ein bewegbares Verschlusselement aufweist, das eine einen ersten Arm (30) und einen zweiten Arm (40) aufweisende Wippe (20) ist, die um eine Schwenkachse (21) schwenkbar am Behälterdeckel (10) gelagert ist, **dadurch gekennzeichnet,**
**dass** der erste Arm (30) eine nach oben gewölbte Verschlussplatte (31) und der zweite Arm (40) ein Gegengewicht (42) aufweisen, wobei das Drehmoment des zweiten Arms (40) größer ist als das Drehmoment des ersten Arms (30).

2. Behälterdeckel nach Anspruch 1, **dadurch gekennzeichnet, dass** der erste Arm (30) unter der Verschlussplatte (31) einen Schwimmer (32) aufweist.

3. Behälterdeckel nach Anspruch 2, **dadurch gekennzeichnet, dass** der Schwimmer (32) am freien Ende des ersten Arms (30) angeordnet ist.

4. Behälterdeckel nach einem der Ansprüche 2 oder 3, **dadurch gekennzeichnet, dass** der Schwimmer (32) beabstandet zur Verschlussplatte (31) angeordnet ist.

5. Behälterdeckel nach einem der Ansprüche 1 bis 4, **dadurch gekennzeichnet, dass** der erste Arm (30) eine Luftkammer (33) aufweist.

6. Behälterdeckel nach Anspruch 5, **dadurch gekennzeichnet, dass** die Wand (34) der Luftkammer (33) nach unten gewölbt ist.

7. Behälterdeckel nach Anspruch 6, **dadurch gekennzeichnet, dass** die Wand (34) ihren maximalen Abstand von der Verschlussplatte (31) im Bereich des freien Endes des ersten Arms (30) aufweist.

8. Behälterdeckel nach einem der Ansprüche 1 bis 7, **dadurch gekennzeichnet, dass** der erste Arm (30) unter der Verschlussplatte (31) eine löffelartige Form aufweist.

9. Behälterdeckel nach einem der Ansprüche 1 bis 8, **dadurch gekennzeichnet, dass** die Verschlussplatte (31) mindestens ein Dichtelement aufweist.

10. Behälterdeckel nach einem der Ansprüche 1 bis 9, **dadurch gekennzeichnet, dass** die Wippe (20) aus Kunststoff besteht

11. Behälterdeckel nach einem der Ansprüche.1 bis 10, **dadurch gekennzeichnet, dass** die Wippe (20) als Gegengewicht (42) eine Metalleinlage aufweist.

12. Behälterdeckel nach Anspruch 11, **dadurch gekennzeichnet, dass** die Metalleinlage ein Metallstift ist, der innerhalb des zweiten Arms (40) angeordnet ist.

13. Behälterdeckel nach einem der Ansprüche 1 bis 12, **dadurch gekennzeichnet, dass** die Wippe (20) an der Unterseite des Behälterdeckels (10) schwenkbar gelagert ist.

14. Behälterdeckel nach einem der Ansprüche 1 bis 13, **dadurch gekennzeichnet, dass** die Einfüllöffnung (12) eine trichterförmige Wand (16) aufweist.

15. Behälterdeckel nach einem der Ansprüche 1 bis 14, **dadurch gekennzeichnet, dass** die Wippe (20) am Rand (13) der Einfüllöffnung (12) gelagert ist.

16. Behälterdeckel nach einem der Ansprüche 1 bis 15, **dadurch gekennzeichnet, dass** der zweite Arm (40) in Öffnungsstellung in einen Freiraum (14) unterhalb des Behälterdeckels (10) einschwenkt.

17. Behälterdeckel nach einem der Ansprüche 1 bis 15, **dadurch gekennzeichnet, dass** sich die Wippe (20) durch den Behälter deckel (10) nach außen erstreckt, wobei der zweite Arm (40) mindestens teilweise außerhalb des Behälterdeckels (10) angeordnet ist.

18. Behälterdeckel nach Anspruch 17, **dadurch gekennzeichnet, dass** der zweite Arm (40) in Schließstellung in eine Deckelmulde (19) eingreift.

19. Behälterdeckel nach einem der Ansprüche 1 bis 18, **dadurch gekennzeichnet, dass** der Rand (13) der Einfüllöffnung (12) eine Dichtfläche aufweist, an der die Verschlussplatte (31) in Schließstellung anliegt.

20. Behälterdeckel nach einem der Ansprüche 1 bis 19, **dadurch gekennzeichnet, dass** der Rand (13) der Einfüllöffnung (12) mindestens ein Dichtelement aufweist.

21. Behälterdeckel nach einem der Ansprüche 1 bis 20, **dadurch gekennzeichnet, dass** eine Entlüftungsöffnung (8) vorgesehen ist.

## Claims

1. Container with a filling opening (12) comprising a mobile closure element which is a rocker (20) which comprises a first arm (30) and a second arm (40) and is mounted on the container lid (10) so as to be pivotable about a pivot axis (21),
**characterised in**
**that** the first arm (30) comprises an upward arched closure plate (31) and the second arm (40) comprises a counterweight (42), wherein the torque of the second arm (40) is greater than the torque of the first arm (30).

2. Container lid according to Claim 1, **characterised in that** the first arm (30) comprises a float (32) below the closure plate (31).

3. Container lid according to Claim 2, **characterised in that** the float (32) is disposed at the free end of the first arm (30).

4. Container lid according to either of Claims 2 and 3, **characterised in that** the float (32) is disposed at a spacing from the closure plate (31).

5. Container lid according to any one of Claims 1 to 4, **characterised in that** the first arm (30) comprises an air chamber (33).

6. Container lid according to Claim 5, **characterised in that** the wall (34) of the air chamber (33) is arched downwards.

7. Container lid according to Claim 6, **characterised in that** the wall (34) is at its maximum distance from the closure plate (31) in the region of the free end of the first arm (30).

8. Container lid according to any one of Claims 1 to 7, **characterised in that** the first arm (30) has a spoon-like shape below the closure plate (31).

9. Container lid according to any one of Claims 1 to 8, **characterised in that** the closure plate (31) comprises at least one sealing element.

10. Container lid according to any one of Claims 1 to 9, **characterised in that** the rocker (20) consists of plastics material.

11. Container lid according to any one of Claims 1 to 10, **characterised in that** the rocker (20) comprises a metal insert as the counterweight (42).

12. Container lid according to Claim 11, **characterised in that** the metal insert is a metal pin which is disposed inside the second arm (40) .

13. Container lid according to any one of Claims 1 to 12, **characterised in that** the rocker (20) is pivotably mounted at the underside of the container lid (10).

14. Container lid according to any one of Claims 1 to 13, **characterised in that** the filling opening (12) comprises a funnel-shaped wall (16).

15. Container lid according to any one of Claims 1 to 14, **characterised in that** the rocker (20) is mounted at the edge (13) of the filling opening (12).

16. Container lid according to any one of Claims 1 to 15, **characterised in that** the second arm (40) pivots into a free space (14) below the container lid (10) in the open position.

17. Container lid according to any one of Claims 1 to 15, **characterised in that** the rocker (20) extends outwards through the container lid (10), wherein the second arm (40) is disposed at least partly outside of the container lid (10).

18. Container lid according to Claim 17, **characterised in that** the second arm (40) engages in a lid depression (19) in the closed position.

19. Container lid according to any one of Claims 1 to 18, **characterised in that** the edge (13) of the filling opening (12) comprises a sealing face against which the closure plate (31) lies in the closed position.

20. Container lid according to any one of Claims 1 to 19, **characterised in that** the edge (13) of the filling opening (12) comprises at least one sealing element.

21. Container lid according to any one of Claims 1 to 20, **characterised in that** a vent opening (8) is provided.

## Revendications

1. Couvercle de contenant, comportant une ouverture de remplissage (12), présentant un élément de fermeture mobile, constitué d'une bascule (20), présentant un premier bras (30) et un deuxième bras (40), montée à pivotement sur le couvercle de pivotement (10) autour d'un axe de pivotement (21), **caractérisé en ce que** le premier bras (30) présente une plaque de fermeture (31) incurvée vers le haut et le deuxième bras (40) présente un contrepoids (42), le couple de rotation du deuxième bras (40) étant supérieur au couple de rotation du premier bras (30).

2. Couvercle de contenant selon la revendication 1, **caractérisé en ce que** le premier bras (30) présente un flotteur (32) sous la plaque de fermeture (31).

3. Couvercle de contenant selon la revendication 2, **caractérisé en ce que** le flotteur (32) est disposé à l'extrémité libre du premier bras (30).

4. Couvercle de contenant selon l'une des revendications 2 ou 3, **caractérisé en ce que** le flotteur (32) est disposé à distance de la plaque de fermeture (31).

5. Couvercle de contenant selon l'une des revendications 1 à 4, **caractérisé en ce que** le premier bras (30) présente une chambre à air (33).

6. Couvercle de contenant selon la revendication 5, **caractérisé en ce que** la paroi (34) de la chambre à air (33) est incurvée vers le bas.

7. Couvercle de contenant selon la revendication 6, **caractérisé en ce que** la paroi (34) présente son espacement maximal vis-à-vis de la plaque de fermeture (31) dans la zone de l'extrémité libre du premier bras (30).

8. Couvercle de contenant selon l'une des revendications 1 à 7, **caractérisé en ce que** le premier bras (30) présente sous la plaque de fermeture (31) une forme en cuillère.

9. Couvercle de contenant selon l'une des revendications 1 à 8, **caractérisé en ce que** la plaque de fermeture (31) présente au moins un élément d'étanchéité.

10. Couvercle de contenant selon l'une des revendications 1 à 9, **caractérisé en ce que** la bascule (20) est formée de matière synthétique.

11. Couvercle de contenant selon l'une des revendications 1 à 10, **caractérisé en ce que** la bascule (20) présente en tant que contrepoids (42) un insert métallique.

12. Couvercle de contenant selon la revendication 11, **caractérisé en ce que** l'insert métallique est un téton métallique, disposé à l'intérieur du deuxième bras (40).

13. Couvercle de contenant selon l'une des revendications 1 à 12, **caractérisé en ce que** la bascule (20) est montée à pivotement en face inférieure du couvercle de contenant (10).

14. Couvercle de contenant selon l'une des revendications 1 à 13, **caractérisé en ce que** l'ouverture de remplissage (12) présente une paroi (16) en forme d'entonnoir.

15. Couvercle de contenant selon l'une des revendications 1 à 14, **caractérisé en ce que** la bascule est montée sur le bord (13) de l'ouverture de remplissage (12).

16. Couvercle de contenant selon l'une des revendications 1 à 15, **caractérisé en ce que** le deuxième bras (40) pivote en position d'ouverture dans un espace libre (14), au-dessous du couvercle de contenant (10).

17. Couvercle de contenant selon l'une des revendications 1 à 15, **caractérisé en ce que** la bascule (20) s'étend vers l'extérieur en traversant le couvercle de contenant (10), le deuxième bras (40) étant disposé au moins partiellement à l'extérieur du couvercle de contenant (10).

18. Couvercle de contenant selon la revendication 17, **caractérisé en ce que** le deuxième bras (40), en position de fermeture, s'engage dans une auge de couvercle (19).

19. Couvercle de contenant selon l'une des revendications 1 à 18, **caractérisé en ce que** le bord (13) de l'ouverture de remplissage (12) présente une face d'étanchéité sur laquelle appuie, en position de fermeture, la plaque de fermeture (31).

20. Couvercle de contenant selon l'une des revendications 1 à 19, **caractérisé en ce que** le bord (13) de l'ouverture de remplissage (12) présente au moins un élément d'étanchéité.

21. Couvercle de contenant selon l'une des revendications 1 à 20, **caractérisé en ce qu'**est prévue une ouverture de sortie d'air (8).
